# EUROPEAN PATENT APPLICATION

(11) **EP 1 172 776 A2**
(43) Date of publication of application: **16.01.2002**
(21) Application number: 01304171.0
(22) Date of filing: 09.05.2001
(51) Int. Cl.: G07F 7/10

(54) **Interactive authentication process**

(30) Priority: 15.07.2000 US 218951 P; 05.09.2000 US 229743 P
(71) Applicant: ED Vision (Holdings) Limited, Road Town, Tortola (VG)
(72) Inventor: Chu, Tung Hung Daniel, Kowloon, Hong Kong (CN); Zhang, Eugene Zhen Yu, Laguna City, Kowloon, Hong Kong (CN)
(74) Representative: Harding, Richard Patrick

(57) **Abstract**

A method of authenticating a person or device, the method comprising the steps of storing a plurality of formulae at a smart card 1 and at a central computer 6. A random number is generated at the central computer 6 and identifies one of said formulae. The random number is then sent to the smart card 1. At the smart card 1, a result is computed using at least the formula identified by the received random number. The computed result is sent to the central computer 6. At the central computer 6, the person or device is authenticated by comparing the received result against a result computed at central computer 6 using said random number and the formulae stored at the central computer.

## Description

The present invention relates to authenticating a person or a device and is applicable in particular, though not necessarily to authenticating a person or device using a smart card.

In recent years there has been a massive growth in the number of cashless financial transactions carried out by both individuals and companies. Examples of cashless financial transactions include payment for goods and services by credit card or debit card (either in person, by telephone, or via the Internet), and telephone and Internet banking. In the future, payment with electronic cash (e-cash) can be added to this list.

A problem which has always existed with cashless transactions is that of authenticating the person (or company) initiating the transaction confirming that that person is entitled to use the cashless payment means which he or she is attempting to use. With the increased use of the Internet and the possibilities which it provides for third parties to intercept transaction data, concern over this problem has grown particularly amongst the general public. Many people are for example unwilling to provide credit details over the Internet, whilst businesses are concerned about the criminal activities of "hackers" who can gain access to individuals credit card details illegally.

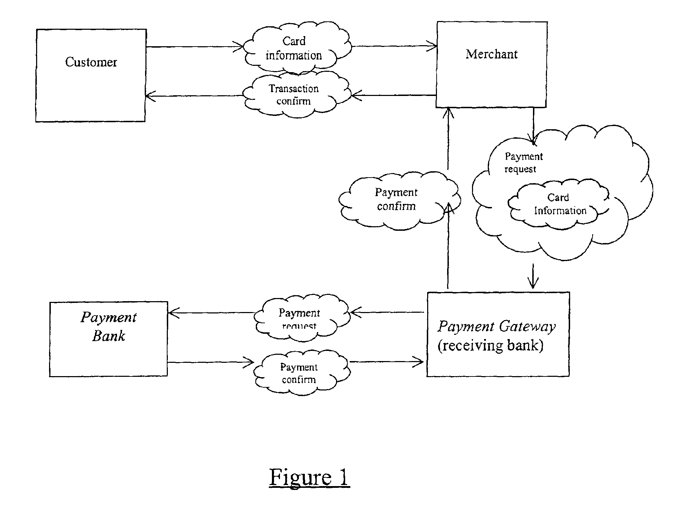

Certain leaders in the credit card business (including Visa™ and Mastercard™) are actively promoting the so-called "SET" standard. The SET proposal is illustrated in Figure 1 and works as follows.

A transaction on the Internet passes through a series of security checks performed using a digital certificate. All the parties involved must have a digital certificate for identification. The customer will use a Cardholder Application, sometimes called a "Wallet", to make the payment. The information payment information is encrypted and sent out with the digital certificate.

The Merchant's Server receives the encrypted payment information. It will add the encrypted payment details of the merchant to the encrypted customer information and send this to a Payment Gateway for verification by the cardholder and confirmation of the payment. The Payment Gateway is usually operated by the receiving bank (i.e. the bank holding the merchant's account). This gateway will verify the customer's (payer's) and the merchant's (payee's) digital certificate. If the identity of the customer and the merchant are confirmed, the transaction can be approved. Since it is operated by the receiving bank of the credit card, the gateway also needs to authenticate the transaction with the card-issuing bank.

A problem with SET is that the system will not work if one party does not have a digital certificate. In addition, as there is a high probability that a hacker can hack into a customer's PC or the merchant's server and obtain the certificate information, a security hole continues to exist. Even the possibility of such an attack gives a dishonest person the opportunity to claim that he or she did not personally initiate a transaction using his or her credit card and that his or her computer was used by an unauthorised person.

In a bid to expand the use of cashless transactions (particularly over the Internet), several countries have either introduced or are considering introducing legislation which affords digital signatures the same legal effect as hand-written signatures. Digital signatures may be used as follows.

A user is provided with a smart card on which is stored the user's digital signature. This is a digital representation of the users actual hand-written signature. When the user makes a purchase, he enters the card into a card reader of the merchant's system. The system requests that the user write his or her signature into the system (using for example a touch sensitive screen). The system will then verify whether the two signatures are the same. If they are the same, then the user is authenticated to proceed with the transaction.

This method has the following potential problems:
1) A third party can steal a copy of the physical signature and trace over the paper to defraud the system;
2) One can modify the reader device so that it always generates an affirmative signal in order to fool the central computer. In this way, a merchant's server can be easily tricked as the authentication relies only on the smart card;
3) The merchant's computer is likely to leave "traces" for a hacker to find and copy.

Another development is the use of fingerprint recognition programs to determine whether or not a card user is the real owner of the card. The system is analogous to the digital signature system described above, but uses a fingerprint rather than a signature, i.e. the card stores a digital representation of the card owner's fingerprint. When the user attempts to make a purchase, the merchant's system requests the user to put their finger on a reader, which scans the fingerprint. The system compares the scanned image with the master image read from the card. Again, this solution has potential problems, similar to those of the digital signature approach.

Many other approaches to authenticating persons and companies for the purpose of completing financial transactions have been adopted. Many of these rely on complicated encryption and authentication algorithms, for example using a public-private key pair. However, whilst offering high levels of security they lack the simplicity of the approaches described above and typically require large amounts of processing power at both the user side and the verification side. These problems are not limited only to financial transactions, and also arise in other situations where authentication of a person or body is required, for example where a person must be authorised to access confidential or restricted information via a remote connection, to receive (cable or satellite) television broadcasts, or to access a corporate local area network.

It is an object of the present invention to overcome or at least mitigate the disadvantages of the user authentication approaches described above. In particular, it is an object of the present invention to provide a means for authenticating an individual, body, device or the like which requires relatively low levels of processing power, whilst at the same time being secure against hacking, fraud, etc.

According to a first aspect of the present invention there is provided a method of authenticating a person or device, the method comprising the steps of:
storing a plurality of formulae at a first computing system;
storing a copy of said formulae at a second computing system;
determining or identifying at said first or second computing system at least one number identifying one of said formulae;
sending said number to the other of the computing systems;
at the first computing system, computing a result using at least the formula identified by the number;
sending the computed result to the second computing system; and
at the second computing system, authenticating the person by comparing the received result against a result computed at the second computing system using said number and the formulae stored at the second computing system.

It will be appreciated that the steps of the method may be carried out in the order specified or in any other suitable order.

The term "person" as used here encompasses individuals, groups of individuals, companies, and other organisations. The term "system" encompasses *inter alia* computer terminals, wireless devices such as mobile telephones, and computer systems.

Preferably, said at least one number is a random number. The at least one random number is generated at the second computing system, and is subsequently sent to the first computing system.

Preferably, in addition to said formulae, a plurality of values are stored at the first computing system and at the second computing system. Said second computing system generates at least one pair of random numbers which are sent to the first computing system. One of said pair of random numbers identifies one of said formulae, whilst the other identifies one of said values. Said results are computed using the identified formula(e) and value(s). More preferably, said values comprise one or more values corresponding to previously calculated results.

Preferably, said first computing system is a portable device such as a smart card or the like. Alternatively however the first computing system may be a mobile telephone, other wireless device, PC, etc. The values and formula may be stored on a memory card or chip which is insertable into the system, e.g. a SIM card in the case of a mobile telephone. Preferably, the second computing system is a central server operated by an organisation responsible for issuing the smart cards. This organisation may be for example a bank.

In a system in which many persons require authentication by said central server, the devices in the possession of the different persons each store different formulae and values.

Preferably, after an authentication phase has been completed, the formulae and/or the values stored by the system and the central server are updated in a non-predictable way. For example, the central server may send to the portable device instructions for rearranging or recomputing said formulae and values. This may comprise for example instructions randomly generated at the central server, and sent to the portable device, identifying a new sequence order for the formulae and values, where said pair of random numbers are formula and value sequence numbers.

Preferably, after a successful authentication, said computed result is added to the sequence of values stored at the first and second computing systems. One previously stored value may be deleted from the sequence.

In certain embodiments of the present invention, a plurality of pairs of random numbers are generated by the second system, and sent to the first system. Each pair comprises a first number identifying one of said values and a second number identifying one of said values. For each pair, and intermediate result is computed using the identified value and formula. A final result is then computed by combining the intermediate results.

Said pair of random numbers may be supplemented by further random numbers to be used in selecting values or formulae for computing a result.

Preferably, said pair(s) of random numbers and said computed result are transmitted between the first and second computing systems unencrypted. Even if this data is intercepted by a "man-in-the-middle" he will be unable to make use of it as he will not have a knowledge of the formulae and values held by the first and second computing systems. Of course, if a higher level of security is required the data may be encrypted. This will require greater processing capabilities at the two systems.

Preferably, said first and second systems communicate with one another via the Internet. This may or may not involve a wireless link. Alternatively however, the systems may communicate via a dedicated telephone connection. Other forms of connection will be readily apparent.

Preferably, access to said first system is protected by a password. Where the system is in the possession of an individual, and the system is used to authenticate that individual, the individual is required to enter a password into the system in order to allow the authentication process to proceed.

Preferably, the method of the present invention is used to authenticate an individual in respect of a financial transaction. This transaction may be a credit or debit card transaction. The result of the authentication process may be sent from the second computing system to a merchant with whom the transaction is being conducted, and or to the first system. The first computing system may be physically connected to a merchant's server, or may communicate with the merchant's server via a communications network such as the Internet. The invention may also be used to authenticate an individual or body for purposes other than financial transactions including, but not limited to, remote access to confidential or restricted information, e.g. a web site.

According to a second aspect of the present invention there is provided apparatus comprising:
a memory for storing a plurality of formulae;
input means for receiving at least one identifier randomly generated by the apparatus or by a remote system, the identifier identifying one of said formulae;
processing means for computing a result using said identified formula; and
output means for sending the computed result to a remote system for the purpose of authenticating the apparatus or a user thereof.

Preferably, the computing system comprises a smart card.

According to a third aspect of the present invention there is provided a method of authenticating a person or device, the method comprising the steps of:
storing a sequence of formulae and a sequence of values at a first computing system and, each time an authentication is required;
selecting at least one formula and at least one value located at specified positions in the respective sequences, and computing a result using the selected formula and value;
authenticating the person or device using computed result; and
reordering and/or updating formulae and/or values in the sequences.

According to a fourth aspect of the present invention there is provided a method of authenticating a person, the method comprising the steps of:
sending an identifier from a computing system accessed by said person to an authentication computing system and to a trusted computing system;
verifying the identifier at the trusted computing system and, in the event that the identifier is verified, sending the identifier to the authentication computing system; and
at the authentication computing system verifying the identifier received from said computing system by comparing it with the identifier received from the trusted computing system.

Preferably, the identifier is sent from said accessed computing system to the trusted computing system in an encrypted form which is decrypted and verified by the trusted computing system and forwarded to the authentication computing system. More preferably, the encryption is carried out using a public key of the person and a symmetric encryption algorithm. The person's private key is known to the trusted server, which is thus able to decrypt and verify the identifier, and forward it in an unencrypted form to the authentication server. The identifier is sent from said terminal to the authentication server in an unencrypted form.

According to a fifth aspect of the present invention there is provided a method of authenticating a person, the method comprising:
storing a plurality of formulae at an authentication computing system;
storing a copy of said formulae at a system accessed by said person;
sending an identifier from said accessed system to said authentication computing system and to a trusted computing system;
verifying the identifier at the trusted computing system and, in the event that the identifier is verified, sending the identifier to the authentication computing system;
at the authentication computing system, verifying the identifier received from said accessed computing system by comparing it with the identifier received from the trusted computing system;
in the event that said identifier is verified at the authentication computing system, randomly generating at the authentication computing system at least one number identifying one of said formulae;
sending said random number to said accessed system;
at the accessed system, computing a result using at least the formula identified by the received random number;
sending the computed result to the authentication computing system; and
at the authentication computing system, authenticating the person by comparing the received result against a result computed at the authentication computing system using said random number and the formulae stored at the authentication computing system.

For a better understanding of the present invention and in order to show how the same may be carried into effect reference will now be made, by way of example, to the accompanying drawings in which:
Figure 1 illustrates schematically an authentication scheme known as SET;
Figure 2 illustrates schematically a system for authenticating an individual to perform a cashless financial transaction;
Figure 3 is a flow diagram illustrating an authentication process occurring in the system of Figure 2; and
Figure 4 illustrates schematically an alternative cashless financial transaction system.

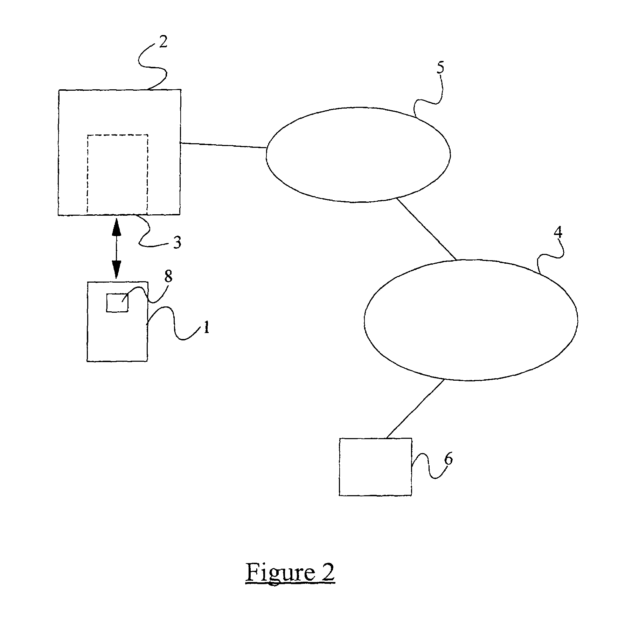

The so-called SET proposal has been described above with reference to Figure 1. An alternative proposal for authenticating an individual (or group, company etc) will now be described with reference to Figure 2 which shows a smart card 1 belonging to an individual (subscriber). The smart card may comprise for example components sandwiched between two metal plates (forming a faraday cage to prevent electronic "eavesdropping"). A server 2, having a smart card reader/writer 3, is operated by a merchant and is coupled to the Internet 4 via an access network 5 (e.g. a PSTN network). A server 6 belonging to a bank is coupled to the Internet 4 (via access networks not shown in Figure 2).

The smart card 1 comprises a memory 8 (e.g. ROM, RAM, NVM, EEROM) in which is stored a unique identity code (account number) of the subscriber. Also stored in the smart card memory 8 is a set of formulae and a set of values (or histories), i.e.:

**Table 1**

| **Sequence No.** | **Formulae** | **Value** |
|---|---|---|
| 1 | formula₁ | value₁ |
| 2 | formula₂ | value₂ |
| 3 | formula₃ | value₃ |
| ... | ... | ... |
| ... | ... | ... |
| N | formula_{N} | value_{N} |

Each formula and value is identified by a sequence number 1 to N. The formulae, values, and sequence numbers are stored in the smart card memory when the smart card is provided to the subscriber or may be stored at a later time. The data is stored in a form which does not allow the subscriber to easily delete or amend it. Typically, the smart card 1 is issued by the subscriber's bank and the stored data originates from that bank. A copy of the data is stored at the bank's server 6, and the data is unique to the subscriber.

A typical cashless financial transaction will now be described, assuming that the subscriber wishes to make a purchase from a merchant operating the server 2. The subscriber presents himself to the merchant and requests to make a purchase. The smart card 1 is inserted into the card reader 3 of server 2. The subscriber may be asked to enter a password (or PIN number) using a keypad of the card reader and which is compared against a password read from the card 1 in order to authenticate the transaction to proceed. This represents a first, low level of security. The reader 3 then reads the subscriber's identity code from the card 1. This code identifies the subscriber's "home" bank, e.g. the bank operating server 6 in Figure 2 (as well as identifying the subscriber to the bank). The merchant's server 2 then sends an authentication request, including the read identity code, to the server 6 via the Internet 4.

Upon receiving the request, the server 6 generates a number of pairs of random numbers, each number in the range 1 to N; i.e. {X₁,Y₁}, {X₂,Y₂},...., {X_{M},Y_{M}}, etc. The generated pairs are sent from the bank's server 6 to the merchant's server 2, where they are passed to the smart card 1 using the card writer 3. Each random number X identifies a corresponding formulae stored in the smart card memory 8, whilst each random number Y identifies a corresponding value. The smart card 1 contains circuitry (which may comprise for example a CPU or hardwired logic) which computes for each random number pair the result: s = formulaₓ {Y}. That is to say that the value identified by the random number Y is used as the variable in the formula identified by random number Y. The results (s₁ to s_{M}) are added together to provide a "signature" value.

The signature value is passed to the server 2 by the card reader 3, and is sent to the bank's server 6. The bank's server stores a copy of the information contained in Table 1 above, and uses this data and the generated random number pairs {X,Y} to compute a signature as described above. The signature generated by the server 6 is compared against the signature received from the merchant's server 2. If the signatures match, an authentication confirm message is returned from the bank's server 6 to the merchant's server 2. Upon receipt of this message, the merchant's server 2 allows the transaction to proceed. If the server 6 determines that the signatures do not match, an authentication denied message is returned to the merchant's server 2, whereupon the merchant's server 2 terminates the transaction.

In order to reduce the risk of a malicious third party reconstructing a current formula/value table (i.e. Table 1) for the subscriber, receipt of an authentication confirm message returned at the merchant's server 2 causes the smart card 1 to update its stored formula/history table. In particular, the histories identified by the second values Y of the random number pairs are replaced with the corresponding results s, i.e. value_{Y1} = s1, value_{Y2} = s2, value_{Y3} = s3, etc.. The data held at the bank's server 6 is updated in exactly the same manner. It will be appreciated that other reordering algorithms may be used.

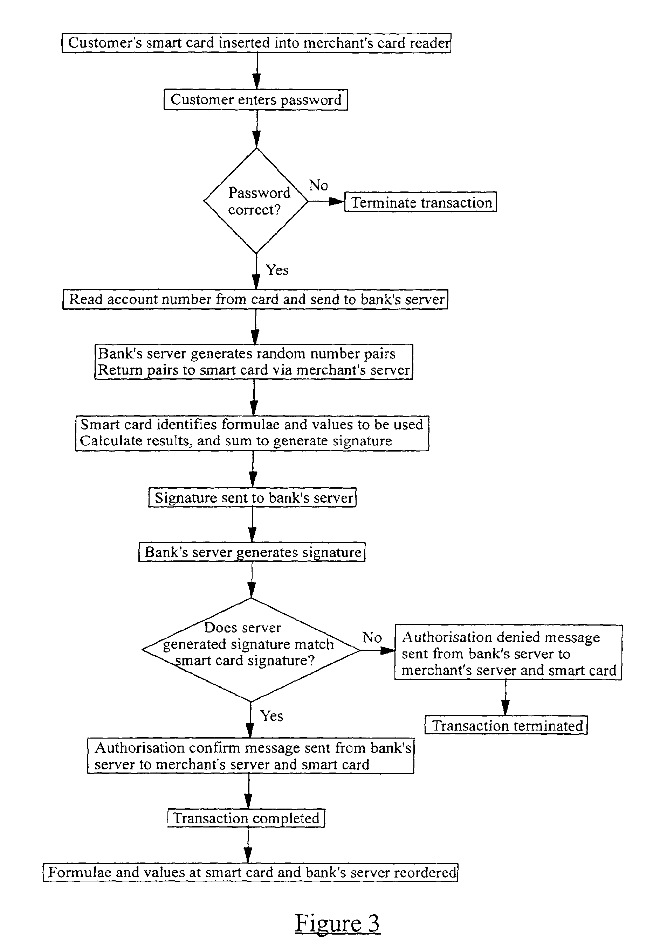

Figure 3 is a flow diagram illustrating this cashless financial transaction process.

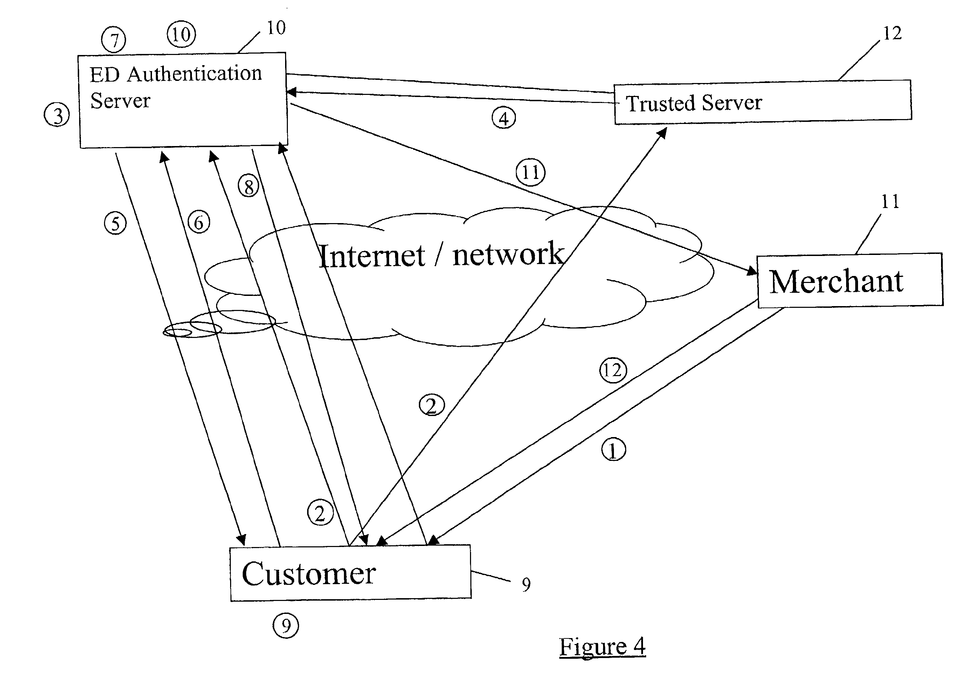

With reference to Figure 4 there is illustrated an alternative authentication process involving a customer device 9, an authentication server 10, a merchant server 11, and a trusted server 12, all of which communicate with one another via the Internet. The customer device 9 may be for example a mobile telephone into which is inserted a Subscriber Identity Module (SIM) card. The SIM card stores a table such as the Table 1 above, with a copy of the table being stored at the authentication server 10 which is operated by the customer's bank. (Alternatively, the customer device may have a second card reader for receiving an authentication smart card, separate from the SIM card.) The trusted server 12 is operated by a party trusted by both the authentication server and the customer. The authentication process consists of the following steps (where the step numbers are indicated in Figure 4) which are carried out after the customer has contacted the merchant's server 11 and identified the goods and services to be purchased:
1. The merchant 11 returns his account code (A/C#) and the amount to be charged, to the customer device 9;
2. The customer inserts his SIM (or authorisation) smart card and enters program password; Upon recognition of password, the user A/C#, Merchant A/C# and amount are sent to the authentication server. At the same time, the same data is encrypted using a private key belonging to the customer (the encryption algorithm is a symmetric encryption algorithm). The encrypted data is sent to the trusted server 12;
3. The authentication server receives the data from the customer and waits for a response from the trusted server;
4. The trusted server knows the private key of the customer, and is able to decrypt the encrypted data to confirm the A/C# of the user (and merchant); The decrypted data is sent to the authentication server 10.
5. The authentication server 10 compares the data received from the mobile telephone 9 with that received from the trusted server 12 to provide a first level authentication of the customer. The authentication server 10 generates the necessary random number pairs and sends these to the mobile telephone 9;
6. The mobile telephone 9 calculates the result and check sum (signature) according to the random pairs received, and sends the result to the authentication server 10;
7. The authentication server 10 calculates the signature according to the random pairs generated, receives the response from customer in a delayed manner, and compares the signatures;
8. The authentication server 10 instructs updating of the SIM card data if the signatures match;
9. The SIM card data is updated;
10. The authentication server data is updated;
11. A confirm authentication message is sent from the authorisation server 10 to the merchant's server 11;
12. The merchant's server 11 confirms to the customer's telephone 1 that the transaction has been completed.

The "echo" approach described above adds a further level of security to that of the embodiment described with reference to Figures 2 and 3. In particular, the process prevents a hacker from merely sending a massive number of signature attempts to the authentication server in the hope that one will match the correct signature.

It will be appreciated by the person of skill in that art that various modifications may be made to the above described embodiments without departing from the scope of the present invention. For example, the smart card may be implemented as a SIM card for use in a mobile telephone. Whilst the values and formulae are stored on the card, the calculation of the result may be carried out either on the card or by the telephone. The present invention may also be implemented on a computer (PC, laptop, palmtop) with or without a smart card.

The authentication server may be arranged to generate a series of random number pairs which are stored in an associated memory for future use. When an authentication request is received at the authentication server from a merchant's server, a set of random number pairs is selected from the stored series, and returned to the client device via the merchant's server. The stored series of random number pairs may have a limited lifetime (e.g. one day).

In another modification to the above described embodiments, random number pairs may be generated at the client device. The generated pairs are then sent to the authentication server in the authentication message. The signature generated by the client device may be included in the authentication message or may be sent later.

It will be appreciated that in addition to the bank (or other authority) authenticating the customer, the customer may verify the bank using a similar or identical exchange process. These authentication procedures may be carried out substantially simultaneously or sequentially.

## Claims

1. A method of authenticating a person or device, the method comprising the steps of:
storing a plurality of formulae at a first computing system;
storing a copy of said formulae at a second computing system;
determining or identifying at said first or second computing system at least one number identifying one of said formulae;
sending said number to the other of the computing systems;
at the first computing system, computing a result using at least the formula identified by the number;
sending the computed result to the second computing system; and
at the second computing system, authenticating the person by comparing the received result against a result computed at the second computing system using said number and the formulae stored at the second computing system.

2. A method according to claim 1, wherein the step of determining or identifying at least one number comprises generating a random number

3. A method according to claim 1 or 2, wherein the at least one number is generated at the second computing system, and is subsequently sent to the first computing system.

4. A method according to any one of claims 1 to 3, wherein, in addition to said formulae, a plurality of values are stored at the first computing system and at the second computing system, and the first or second computing system generates at least one pair of random numbers which are sent to the other of the first and second computing system, one of said pair of random numbers identifying one of said formulae, and the other identifying one of said values, and said results being computed using the identified formula(e) and value(s).

5. A method according to claim 4, wherein said values comprise one or more values corresponding to previously calculated results.

6. A method according to claim 5, wherein said computed result is included in the sequence of values stored at the first and second computing systems.

7. A method according to claim 6, wherein the computed result replaces an existing value in the sequence of values.

8. A method according to any one of the preceding claims, wherein said first computing system is a portable device such as a smart card, PDA, mobile telephone or other wireless device.

9. A method according to any one of claims 1 to 7, wherein said first computing system comprises a removable storage medium on which is stored said plurality of formulae and means for reading and writing to the removable storage medium.

10. A method according to any one of claims 1 to 7, wherein the first computing system is a non-portable device such as a PC or server.

11. A method according to any one of the preceding claims, wherein said second computing system is a central server operated by an organisation responsible for issuing the smart cards.

12. A method according to claim 4 or to any one of claims 5 to 11 when appended to claim 4, wherein the combination of formulae and values stored on the first computing system are unique to that system.

13. A method according to claim 12, wherein one or more pairs of random numbers are generated by the second system, and sent to the first system, each pair comprising a first number identifying one of said formulae and a second number identifying one of said values and, for each pair, an intermediate result is computed using the identified value and formula and a final result is then computed by combining the intermediate results.

14. A method according to any one of the preceding claims, wherein the formulae stored by the first and second computing systems are updated and/or rearranged in a non-predictable way during or after the authentication process.

15. A method according to any one of claims 1 to 14, wherein each said formula is interpretable in different ways, the method comprising defining for each formula a given interpretation for the authentication procedure, and redefining the interpretation for one or more of the formulae following the authentication procedure.

16. A method according to any one of the preceding claims, wherein said number(s) and said computed result are transmitted between the first and second computing systems unencrypted.

17. A method according to any one of the preceding claims, wherein access to said first system is protected by a password.

18. Apparatus comprising:
a memory for storing a plurality of formulae;
input means for receiving at least one identifier randomly generated by the apparatus or by a remote system, the identifier identifying one of said formulae;
processing means for computing a result using said identified formula; and
output means for sending the computed result to a remote system for the purpose of authenticating the apparatus or a user thereof.

19. Apparatus according to claim 18, wherein the apparatus comprises a smart card.

20. A method of authenticating a person or device, the method comprising the steps of:
storing a sequence of formulae and a sequence of values at a first computing system and, each time an authentication is required;
selecting at least one formula and at least one value located at specified positions in the respective sequences, and computing a result using the selected formula and value;
authenticating the person or device using computed result; and
reordering and/or updating formulae and/or values in the sequences.

21. A method of authenticating a person, the method comprising the steps of:
sending an identifier from a computing system accessed by said person to an authentication computing system and to a trusted computing system;
verifying the identifier at the trusted computing system and, in the event that the identifier is verified, sending the identifier to the authentication computing system; and
at the authentication computing system verifying the identifier received from said computing system by comparing it with the identifier received from the trusted computing system.

22. A method according to claim 21, wherein the identifier is sent from said accessed computing system to the trusted computing system in an encrypted form which is decrypted and verified by the trusted computing system and forwarded to the authentication computing system.

23. A method of authenticating a person, the method comprising:
storing a plurality of formulae at an authentication computing system;
storing a copy of said formulae at a system accessed by said person;
sending an identifier from said accessed system to said authentication computing system and to a trusted computing system;
verifying the identifier at the trusted computing system and, in the event that the identifier is verified, sending the identifier to the authentication computing system;
at the authentication computing system, verifying the identifier received from said accessed computing system by comparing it with the identifier received from the trusted computing system;
in the event that said identifier is verified at the authentication computing system, randomly generating at the authentication computing system at least one number identifying one of said formulae;
sending said random number to said accessed system;
at the accessed system, computing a result using at least the formula identified by the received random number;
sending the computed result to the authentication computing system; and
at the authentication computing system, authenticating the person by comparing the received result against a result computed at the authentication computing system using said random number and the formulae stored at the authentication computing system.

24. A method of authenticating a first person or body to a second person or body and *vice versa* and comprising carrying out the method of any one of claims 1 to 17 or 20 to 23 in both direction.
